Europäisches Patentamt

(19) European Patent Office

Office européen des brevets

(11) Publication number: **0 092 964**
**A1**

## (12) EUROPEAN PATENT APPLICATION

(21) Application number: **83302221.3**

(22) Date of filing: **19.04.83**

(51) Int. Cl.³: **F 16 H 3/08**

(30) Priority: **28.04.82 GB 8212314**

(43) Date of publication of application:
**02.11.83 Bulletin 83/44**

(84) Designated Contracting States:
**AT BE DE FR GB IT NL SE**

(71) Applicant: **AUTOMOTIVE PRODUCTS PUBLIC LIMITED COMPANY**
**Tachbrook Road**
**Leamington Spa Warwickshire CV31 3ER(GB)**

(72) Inventor: **Bainbridge, Wilfred Nicholas**
**Staddle Stones Overthorpe**
**Banbury Oxon(GB)**

(74) Representative: **Adkins, Michael et al,**
**Withers & Rogers 4 Dyer's Buildings**
**Holborn London, EC1N 2JT(GB)**

(54) **Change speed transmission.**

(57) The transmission has an input shaft (23) an output shaft (24) and four two two-wheel gear trains (A, B, C, D) therebetween. Each train has an input gear wheel (26, 27, 29, 31) and an output gear wheel (32, 33, 34, 35). The input shaft comprises two separate parts (23a, 23b) each of which carries two input gear wheels. The two parts are selectively interconnectable by input shaft clutch means (28) which enables the two parts to rotate together. Bridging clutch means (38) is provided between two output gear wheels (33, 34) which are respectively in mesh with input gear wheels (27, 29) coaxial with one and the other said parts of the input shaft.

FIG. 2

Croydon Printing Company Ltd.

## CHANGE SPEED TRANSMISSION

This invention relates to change speed transmissions particularly, though not exclusively, suitable for motor vehicles.

A typical change speed transmission for a vehicle has four two-wheel gear trains, each train being individually engageable between the input and the output to provide one of four speed ratios. It is known to increase the number of speed ratios available by adding further individually engageable two-wheel gear trains, one for each additional speed ratio required. This solution, however, increases the overall length of the transmission.

Vehicle manufacturers are seeking to provide additional speed ratios, for example an overdrive speed ratio for high speed motorway cruising with maximum fuel economy. The trend towards transverse engined front wheel drive cars has led to problems because the available space in the engine bay is often not sufficient to increase the number of speed ratios by adding two-wheel gear trains. This is especially so for vehicles with large capacity engine options as the maximum capacity engine option for such a front wheel drive vehicle may be limited by the length of the transmission available.

The present invention seeks to provide an increased number of speed ratios without increasing the length of the transmission unduly.

According to the invention there is provided a change speed transmission having an input shaft, an output shaft and a plurality of two-wheel gear trains therebetween, each train having an input gear wheel coaxial with the input shaft and an output gear wheel coaxial with the output shaft and connectable thereto by clutch means, characterised in that the input shaft comprises separate parts which carry the input gear wheels, said parts of the input shaft being selectively interconnectable by input shaft clutch means to enable said parts to rotate together, and bridging clutch means is provided between two of the ouput gear wheels which are respectively in mesh with input gear wheels carried by respective said parts of the input shaft.

Preferably the input shaft comprises two separate parts, two said input gear wheels being carried by one part and two further input gear wheels being carried by the other part.

One part of the input shaft may have its two input gear wheels rotatably fast therewith. In such a case the other part of the input shaft may have the two further input gear wheels rotatably fast therewith.

One part of the input shaft may carry a sleeve for rotation relative thereto, said sleeve having two of said input gear wheels rotatably fast with the sleeve, and the other part of the input shaft may have the two further input gear wheels rotatably fast therewith. Preferably the input shaft clutch means is operable to selectively connect the sleeve to the said one part of the input shaft to enable the sleeve and said one part of the shaft to rotate together.

Transmissions in accordance with the invention will now be described by way of example with reference to the accompanying drawings in which:-

Fig. 1 is a diagrammatic representation of a transverse-engined front-wheel-drive transmission layout;

Fig. 2 is a schematic illustration of a five speed transmission according to the invention; and

Fig. 3 is a schematic illustration of a six speed transmission according to the invention;

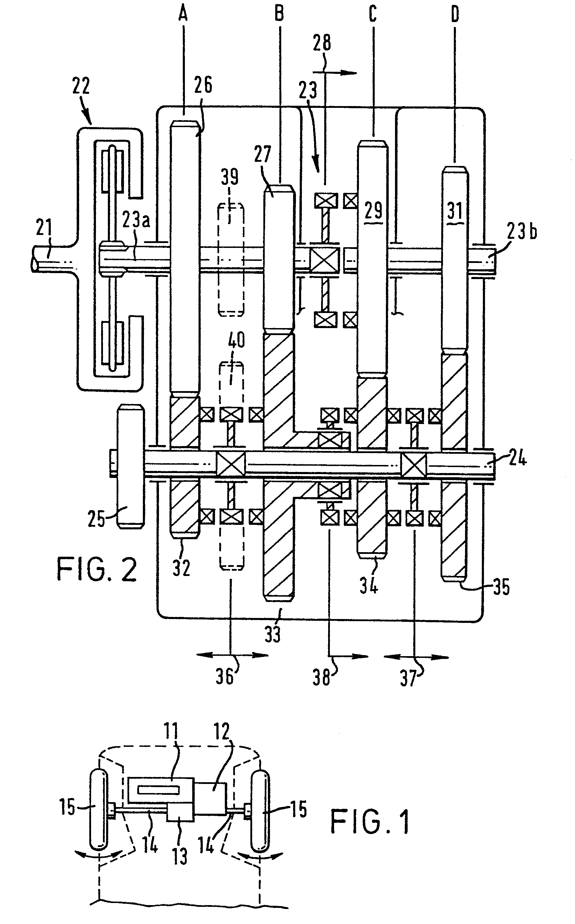

With reference to Fig. 1 there is shown the engine and transmission layout of a typical transverse-engined front-wheel-drive vehicle, the outline of the vehicle is shown as a dotted line. An engine 11 drives through a side mounted transmission 12 to a final drive and differential gear 13. Shafts 14 transmit the drive to steerable road wheels 15 of the vehicle. Such a drive line layout is becoming increasingly common in present-day vehicles.

A transmission according to the invention is shown in detail in Fig. 2.

An engine output shaft 21 is connected through the usual friction clutch 22 to an input shaft 23 of the transmission. Four two-wheel gear trains, A, D, C and D, are provded between the input shaft and an output shaft 24 which has an output gear wheel 25 for drive to the final drive and differential gear.

The input shaft 23 comprises two coaxial parts 23a and 23b. The part 23a is drivable directly from the friction clutch 22 and has two input gear wheels 26, 27 fast for rotation thereon. The part 23b is selectively connectable to part 23a by input shaft clutch means 28 and carries fast thereon the two remaining input gear wheels 29, 31.

The output shaft 24 has journalled thereon the driven gear wheels 32-35 of the trains A-D which are selectively connectable to the shaft 24 by clutch assemblies 36, 37. The gear wheels 33 and 34 are selectively connectable for rotation together by clutch means 38.

The clutch assemblies 36, 37 may be synchronisers of a type well known in the manual gearbox art and shiftable in response to movement of a driver operated lever to connect the input and output shafts. The clutch means 28 and 38 may be synchronisers or dog clutches and are controlled by the same driver operated lever.

A reverse speed ratio may be provided by any convenient means, for example a gear-wheel 39 fast with the input shaft 23a and a gear wheel 40 formed on the clutch assembly 36, the wheels 39 and 41 being drivable through an idler wheel, not shown, to reverse rotation of the drive.

Operation of the transmission of Fig. 2 will now be described with reference to the table below.

| Speed Ratios | Gear Train | Clutches Engaged |
|---|---|---|
| 1 | B,C,D | 38 → 37 → |
| 2 | B | 36 → |
| 3 | D | 28 → 27 → |
| 4 | C | 28 → 37 ← |
| 5 | A | 36 ← |

Fig. 3

First speed ratio is selected by engaging clutch 38 and by shifting clutch assembly 37 rightwards, as indicated by the arrow in the right hand column of the above table.

One engagement of the clutch 22 drive will be transmitted in sequence through gear trains B, C and D to the output shaft 24.

To change a second speed ratio the clutch is disengaged in the usual manner and the driver controlled selector lever moved to disengage clutch 38, shift assembly 37 to the neutral position and shift assembly 36 rightwards, as viewed in Fig. 2. On engagement of the clutch 22 drive is transmitted through gear train B to the output shaft.

The remaining gear trains are selected as required by the vehicle driver, each speed ratio having a different two-wheel train.

As is clear from the above table, clutch 28 must be engaged for third and fourth speed ratio. However, it does not matter whether it is engaged or not for second and fifth speed ratios as drive is not transmitted through the input shaft part 23b in those ratios. To keep movement of clutch 28 to a minimum it is preferable that the clutch 28 is engaged for all ratios other than first. In that way the transmission will operate generally as a conventional four-speed transmission for the upper four speed ratios available.

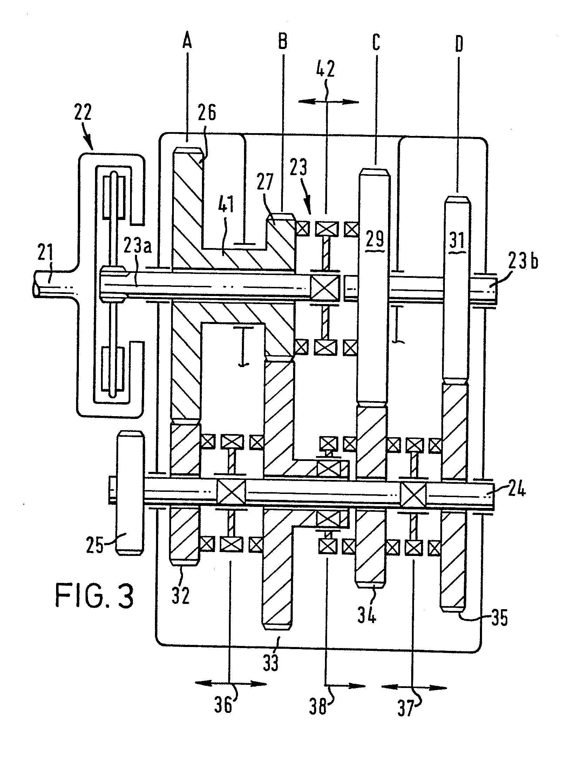

Fig. 3 illustrates a six speed transmission in accordance with the invention. As will become apparent the first to fifth ratios available correspond to the previous embodiment and common parts carry the same reference numerals.

The input gear wheels 26 and 27 are fast for rotation with a sleeve 41 journalled on the input shaft 23a. A double sided dog clutch 42 serves to connect the input shaft part 23a to either the part 23b or to sleeve 41.

Operation of the transmission is apparent from the table below and is substnatially identical to the Fig. 2 embodiment for the lowest five speed ratios available with the exception that the clutch 42 must be shifted according to whether trains A or B or trains C or D are to be driven from the clutch 22.

| Speed Ratio | Gear Grains | Clutches Engaged |
|---|---|---|
| 1 | B,C,D | 42 ← 38 → 37 → |
| 2 | B | 42 ← 36 → |
| 3 | D | 42 → 37 → |
| 4 | C | 42 → 37 ← |
| 5 | A | 42 ← 36 ← |
| 6 | C,B,A | 42 → 38 → 36 ← |

Sixth speed ratio is provided by driving sequentially through gear trains C, B and A as indicated in the above table and it is for this reason that trains B and A must be disconnectable from the shaft 23a.

The skilled man in the art will be able to see that by introducing further clutches, other six wheel gear trains of the transmission may result in additional useful speed ratios. For example the gear train D,B,A will give a speed ration intermediate the present 5th and 6th ratios.

Reverse speed ratio may be provided in the same manner as that shown in Fig. 2.

CLAIMS

1.    A change-speed transmission having an input shaft (23), an output shaft (24) and a plurality of two-wheel gear trains (A, B, C, D) therebetween, each train having an input gear wheel (26, 27, 29,31) coaxial with the input shaft and an output gear wheel (32, 33, 34, 35) coaxial with the output shaft and connectable thereto by clutch means (36, 37), characterised in that the input shaft (23) comprises separate parts (23a, 23b) which carry the input gear wheels (26, 27, 29, 31), said parts of the input shaft being selectively interconnectable by input shaft clutch means (28; 42) to enable said parts to rotate together, and bridging clutch means (38) is provided between two of the output gear wheels (33, 34) which are respectively in mesh with input gear wheels (27, 29) carried by respective said parts (23a, 23b) of the input shaft.

2.    A transmission according to claim 1 characterised in that the input shaft (23) comprises two separate parts (23a, 23b), two said input gear wheels (26, 37) being carried by one part (22a) and two further input gear wheels (29, 31) being carried by the other part.

3.    A transmission according to claim 2 characterised in that one part (23a) of the input shaft (23) has its two input gear wheels (26, 27) rotatably fast therewith.

4.      A      transmission      according to claim 3 characterised in that the other part (23b) of the input shaft
(23) has its two input gear wheels (29, 31) rotatably
fast therewith.

5.      A      transmission      according to any preceeding
claim characterised in that four two-wheel gear trains
(A, B, C, D) are provided which enable five speed ratios
to be selected.

6.      A transmission according to claim 2 characterised
in that one part (23a) of the input shaft (23) carries
a sleeve (41) for rotation relative thereto, said sleeve
having the two of said input gear wheels (26, 27) rotatably
fast with the      said sleeve, and the other part (23b)
of the input shaft having the further input gear wheels (29,
31) rotatably fast therewith.

7.      A transmission according to claim 6 characterised
in that the input shaft clutch means (42) is operable
to selectively connect the sleeve (41) to the said one
part (23a) of the input shaft (23) to enable the sleeve
and said one part of the shaft to rotate together.

8.      A transmission according to claim 6 or 7 characterised in that four two-wheel gear trains (A, B, C, D) are provided which enable six speed ratios to be selected

0092964

1 / 2

FIG. 2

FIG. 1

FIG. 3

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-C-1 188 449 (KLÖCKNER-HUMBOLDT-DEUTZ) * Column 3, line 39 - column 4, line 23; figure * | 1 | F 16 H 3/08 |
| A | | 3,6,7 | |
| X | DE-A-2 132 669 (KLÖCKNER-HUMBOLDT-DEUTZ) * Figures 1, 2 * | 1 | |
| P,X | EP-A-0 061 903 (AUTOMOTIVE PRODUCTS) * Claims 1, 4, 5; figure 1 * | 1,2 | |
| P,A | | 3,4,6 7 | TECHNICAL FIELDS SEARCHED (Int. Cl. ³) |
| A | DE-U-1 898 289 (ZAHNRADFABRIK FRIEDRICHSHAFEN) * Page 2, line 18 - page 4, line 18; figure 1 * | 1,2,6 7 | F 16 H 3/00 |
| A | GB-A- 423 952 (O.D. NORTH et al.) * Claim 1; figures 1-10 * | 1 | |
| A | DE-C- 938 106 (R. FRANKE) | | |

The present search report has been drawn up for all claims

| Place of search BERLIN | Date of completion of the search 30-06-1983 | Examiner LEMBLE Y.A.F.M. |
|---|---|---|